# EUROPÄISCHE PATENTANMELDUNG

(11) **EP 2 717 426 A2**
(43) Veröffentlichungstag der Anmeldung: **09.04.2014**
(21) Anmeldenummer: 13186618.8
(22) Anmeldetag: 30.09.2013
(51) Int. Cl.: H02J 13/00

(54) **Verfahren zum Betreiben einer Stromquelle und Vorrichtung zum Trennen einer Stromquelle von einem Verbraucher**

(30) Priorität: 05.10.2012 DE 102012019556
(71) Anmelder: M & S sectec GbR, 93073 Neutraubling (DE)
(72) Erfinder: Czech, Stephan, 93093 Donaustauf (DE); Czech, Manuel, 94575 Windorf (DE); Dennerle, Andreas, 93051 Regensburg (DE)
(74) Vertreter: Hannke, Christian

(57) **Zusammenfassung**

Die Erfindung betrifft ein Verfahren zum Betreiben einer Stromquelle (1), wobei in einem ersten Betriebszustand ein von der Stromquelle (1) gelieferter Strom über eine Stromleitung (3) einem Verbraucher (2) zugeführt wird und wobei in einem zweiten Betriebszustand eine Zuführung eines von der Stromquelle (1) über eine Stromleitung (3) gelieferten Stromes zu dem Verbraucher (2) durch eine Trenneinrichtung (4) unterbunden wird. Die Erfindung zeichnet sich dadurch aus, dass eine der Stromquelle (1) zugeordnete Trenneinrichtung (4) über die Stromleitung (3) eine Kennung an eine dem Verbraucher (2) zugeordnete Steuereinheit (5) sendet, wenn die Stromquelle (1) Strom liefert, und dass
a) der erste Betriebszustand ausgeführt wird, wenn die Steuereinheit (5) darauf ein erwartetes Signal in einem vordefinierten Zeitintervall (td) über die Stromleitung (3) zurücksendet oder
b) der zweite Betriebszustand ausgeführt wird, wenn die Steuereinheit (5) darauf ein anderes Signal oder gar kein Signal in einem vordefinierten Zeitintervall (td) über die Stromleitung (3) zurücksendet.

## Beschreibung

Die Erfindung betrifft ein Verfahren zum Betreiben einer Stromquelle nach dem Oberbegriff des Patentanspruchs 1 und eine Vorrichtung zum Trennen einer Stromquelle von einem Verbraucher nach dem Oberbegriff des Patentanspruchs 7.

Derartige Verfahren und Vorrichtungen werden daher beispielsweise auch auf dem Gebiet der Fotovoltaik eingesetzt. Dabei wird ein von den in der Regel auf einem Dach eines Gebäudes als Stromquellen angeordneten Fotovoltaikmodulen erzeugter Gleichstrom mit einer hohen Spannung, die gegebenenfalls sogar im kV-Bereich liegt, an einen als Wechselrichter ausgebildeten Verbraucher geliefert. Der Wechselrichter weist oftmals in solchen Schaltungsanordnungen erstmals hinter der Stromquelle eine Trenneinrichtung zum Stromlosschalten auf. Allerdings steht die Stromleitung zwischen der als Stromquelle dienenden Fotovoltaikanlage und der Trenneinrichtung des Wechselrichters immer noch unter Strom, so dass Wartungsarbeiten nur mit erhöhter Vorsicht durchgeführt werden können. Im Falle eines Brandes eines mit einer solchen Fotovoltaikanlage ausgerüsteten Gebäudes bleibt der Feuerwehr oftmals nichts anderes übrig, als das Gebäude kontrolliert abbrennen zu lassen, da die unter Strom stehenden Stromleitungen zwischen Fotovoltaikmodulen und Wechselrichter für die Feuerwehr ein nicht kalkulierbares Risiko darstellen.

Ferner existieren aktiv auszulösende Schutzschalter. Gängige Praxis ist dabei, einen Summenstrom einer Anzahl von Stromquellen, beispielsweise stromerzeugender Zellen vor der Einspeisung in den folgenden Knoten, durch einen Schutzschalter abzusichern. Der mit hohen Summenströmen beaufschlagte Schutzschalter muss aktiv kabelgebunden oder durch Funkfernsteuerung ausgelöst werden. Teilversagen einer der beteiligten Komponenten führt zum Versagen des Sicherungssystems, so dass eine sichere Abschaltung beziehungsweise eine sichere Trennung der Stromquelle vom Rest der Infrastruktur nicht gewährleistet werden kann.

Es existieren aber auch passiv auslösende Schutzschalter auf Modulebene. Diese Schutzschalter werden durch eine physikalische Eigenschaft der abzusichernden Gefahr ausgelöst. So trennt beispielsweise ein Brandschutzschalter durch das Durchschmelzen der Verbindung die einzelne Stromquelle von der nachfolgenden Infrastruktur. Eine Zuordnung, ob und wann diese Sicherung auslöst, ist ebenso wie eine gefahrfremde Auslösung, beispielsweise für Wartungszwecke, nicht möglich.

Sowohl bei der Montage und Wartung als auch in Notsituationen wie beispielsweise der Brandbekämpfung stellen daher nicht abstellbare Stromquellen eine erhebliche Gefahr für das mit der Montage und der Wartung beschäftigte Personal beziehungsweise für die die Notsituation bekämpfenden Rettungskräfte dar. Um innerhalb der oft erheblichen Distanzen zwischen einer Stromquelle und einer nächstliegenden Trenneinrichtung agieren zu können, ist die zuverlässige Trennung der Stromquelle von der weiterführenden Infrastruktur wünschenswert, da dadurch ein erheblicher Sicherheitsgewinn erzielt werden kann. Eine entsprechende Trenneinrichtung könnte beispielsweise Batteriezellen in Notstromanlagen, Einzelzellen in Batteriepaketen von Elektro- beziehungsweise Hybridfahrzeugen oder Module aus Fotovoltaikgeneratoren stromlos schalten.

Es ist daher Aufgabe der Erfindung, ein Verfahren zum Betreiben einer Stromquelle und Vorrichtung zum Trennen einer Stromquelle von einem Verbraucher bereit zu stellen, mit welchem beziehungsweise mit welcher eine Abschaltung einer Stromquelle von der der Stromquelle nachfolgenden Infrastruktur sicher und effizient durchgeführt werden kann.

Verfahrensmäßig wird diese Aufgabe gelöst durch ein Verfahren mit den Merkmalen des Patentanspruchs 1. Vorrichtungsmäßig wird diese Aufgabe gelöst durch eine Vorrichtung mit allen Merkmalen des Patentanspruchs 7. Vorteilhafte Ausgestaltungen der Erfindungen finden sich in den Unteransprüchen.

Das erfindungsgemäße Verfahren zum Betreiben einer Stromquelle, wobei in einem ersten Betriebszustand ein von der Stromquelle gelieferter Strom über eine Stromleitung einem Verbraucher zugeführt wird und wobei in einem zweiten Betriebszustand eine Zuführung eines von der Stromquelle über eine Stromleitung gelieferten Stromes zu dem Verbraucher durch eine Trenneinrichtung unterbunden wird, zeichnet sich dadurch aus, dass eine der Stromquelle zugeordnete Trenneinrichtung über die Stromleitung eine Kennung an eine dem Verbraucher zugeordnete Steuereinheit sendet, wenn die Stromquelle Strom liefert, und dass entweder der erste Betriebszustand ausgeführt wird, wenn die Steuereinheit darauf ein erwartetes Signal in einem vordefinierten Zeitintervall td über die Stromleitung zurücksendet oder der zweite Betriebszustand ausgeführt wird, wenn die Steuereinheit darauf ein anderes Signal oder gar kein Signal in einem vordefinierten Zeitintervall über die Stromleitung zurücksendet.

Die erfindungsgemäße Vorrichtung zum Trennen einer Stromquelle von einem Verbraucher mit einer an der Stromquelle anordnenbaren Trenneinrichtung und einer entfernt davon, vorzugsweise im Bereich des Verbrauchers anordnenbaren Steuereinheit, wobei die Stromquelle und der Verbraucher über eine Stromleitung miteinander verbunden sind, zeichnet sich dadurch aus, dass die Trenneinrichtung dazu ausgebildet ist, eine Kennung an die Steuereinheit zu senden, und dass die Steuereinheit dazu ausgebildet ist, ein Signal als Antwort auf die Kennung an die Trenneinrichtung zu senden.

Durch das erfindungsgemäße Verfahren und die erfindungsgemäße Vorrichtung wird die Stromeinspeisung in die weiterführende Infrastruktur unmittelbar in oder an der Stromquelle unabhängig von der abzusichernden Gefahr unterbunden. Dabei erfolgt die Auslösung der Trenneinrichtung beziehungsweise die Ausführung des zweiten Betriebszustandes, bei dem die Zuführung eines von der Stromquelle über eine Stromleitung gelieferten Stromes zu dem Verbraucher durch eine Trenneinrichtung unterbunden wird, von einem von der oder den Stromquellen entfernten Standorten aus, ohne dass eine zusätzliche kabelgebundene Infrastruktur oder eine Datenfunkverbindung benötigt wird.

Durch das erfindungsgemäße Verfahren und die erfindungsgemäße Vorrichtung wird bei einem Fehler oder einem Ausfall nur einer zugehöriger Komponente der Trenneinrichtung beziehungsweise bei einem Ausfall der Stromquelle das gesamte System selbsttätig in einen sicheren Betriebszustand, der dem zweiten Betriebszustand entspricht, bei dem die Zuführung eines von der Stromquelle über eine Stromleitung gelieferten Stromes zu dem Verbraucher durch eine Trenneinrichtung unterbunden wird. Die ordnungsgemäße Funktion aller beteiligten Komponenten der erfindungsgemäßen Vorrichtung ist somit Voraussetzung für die Energieabgabe der Stromquelle an den Verbraucher.

Die Trenneinrichtung sendet dabei periodisch eine eindeutige Kennung in das durch die Stromleitung gebildete Kommunikationsnetz. Die Steuereinheit beantwortet im ersten Betriebszustand die Kennung innerhalb eines vordefinierten Zeitintervalls td mit einer positiven Antwort in Form eines vordefinierten Signals. Empfängt die Trenneinrichtung innerhalb des vordefinierten Zeitintervalls td keine Antwort beziehungsweise nicht das vordefinierte Signal, so deaktiviert sie die Leistungsabgabe durch Trennung der Stromquelle von der restlichen Infrastruktur und Überführung des Systems in den zweiten Betriebszustand, bei dem die Zuführung eines von der Stromquelle über eine Stromleitung gelieferten Stromes zu dem Verbraucher unterbunden ist.

Ein weiterer Vorteil der erfindungsgemäßen Vorrichtung ist, dass sie in bereits bestehende Systeme ohne größeren Installationsaufwand nachgerüstet werden kann. Lediglich die Stromquelle muss dazu mit einer entsprechenden Trenneinrichtung und der Verbraucher mit einer entsprechenden Steuereinheit ausgestattet werden. Die Einbindung muss dabei derart erfolgen, dass die Stromleitung zwischen einer Stromquelle, beispielsweise einem Fotovoltaikmodul, und einem Verbraucher, beispielsweise einem Wechselrichter, mit der durch die Trenneinrichtung gesendeten Kennung beziehungsweise dem durch die Steuereinheit gesendeten Signal beaufschlagt werden kann.

Dabei ist es natürlich auch möglich, die erfindungsgemäße Vorrichtung und das erfindungsgemäße Verfahren in bereits bestehende Steuereinheiten, wie beispielsweise ein Steuergerät eines Wechselrichters zu integrieren.

Das erwünschte Systemverhalten wird durch die Anordnung einer mittels einer an oder in dem Verbraucher angeordneten Steuereinheit fernsteuerbaren Trenneinrichtung unmittelbar an der Stromquelle erreicht. Die gewünschte Fail-Safe-Charakteristik ergibt sich dabei aus einer Beschaltung, die die Freischaltung beziehungsweise den ersten Betriebszustand, bei dem ein von der Stromquelle gelieferter Strom über eine Stromleitung einem Verbraucher zugeführt wird, nur während einer aktiven, ständigen Signalisierung durch ein entfernt angebrachtes Steuergerät aufrechterhält. Dies geschieht in Form eines Frage-Antwort-Spiels mit der durch die Trenneinrichtung erzeugten Kennung und dem durch die Steuereinheit erzeugten zu der Kennung korrespondierenden, vordefinierten Signals, welches innerhalb des vordefinierten Zeitintervalls td von der Steuereinheit gesendet beziehungsweise von der Trenneinrichtung wieder empfangen werden muss.

Die Stromquelle kann mit Hilfe der Erfindung gezielt abgeschaltet werden, indem die Steuereinheit angewiesen wird, kein Signal oder kein zu der von der Trenneinrichtung gesendeten Kennung korrespondierendes, vordefiniertes Signal zurück zu senden, wodurch der zweite Betriebszustand geschaltet wird, bei dem eine Zuführung eines von der Stromquelle über eine Stromleitung gelieferten Stromes zu dem Verbraucher durch eine Trenneinrichtung unterbunden wird.

Nach einem ersten weiterführenden Gedanken der Erfindung wird die von der Trenneinrichtung gesendete Kennung und das von der Steuereinheit gesendete Signal auf die Stromleitung aufmoduliert. Die Kommunikation zwischen Trenneinrichtung und Steuereinheit erfolgt also durch Aufmodulation der Kommunikationsinformation auf die bestehende Leitungsinfrastruktur.

Die Aufmodulation der gesendeten Kennung und des gesendeten Signals erfolgt dabei vorzugsweise in Form eines paketorientierten Kommunikationsprotokolls, wobei die Codierung der gesendeten Kennung und des gesendeten Signals vorteilhafterweise im Manchester Code erfolgt. Dies ist insbesondere deshalb vorteilhaft, weil hierbei der Gleichspannungsanteil gleich Null ist, weshalb ein gegenseitiger Einfluss von wechselnden Besonnungszuständen bei Einsatz der Erfindung in Fotovoltaikanlagen und Datenübertragung ausgeschlossen werden kann.

Dabei hat es bewährt, als paketorientiertes Kommunikationsprotokoll eine Variante des PLC-Busprotokolls zur Datenübertragung zu verwenden. Gegenüber der Umsetzung eines anderen Protokolls, beispielsweise des X10 Protokolls, bietet hier der erheblich erweiterte Adressumfang mit adressierbaren 64000 Busteilnehmern ausreichend Reserven für spätere Erweiterungen.

Wie bereits eingangs erwähnt, wird vorzugsweise als Stromquelle ein Fotovoltaikmodul und als Verbraucher ein Wechselrichter verwendet.

Die interne Ausführung der Trenneinrichtung erlaubt dabei den Betrieb sowohl in Parallel- als auch in Reihenschaltung.

Nach einem weiteren Gedanken der Erfindung weist die Trenneinrichtung einen Mikrocontroller, einen vorzugsweise mit einer Freilaufdiode versehenen By-Pass und einen vorzugsweise mit einem MosFET und einem Elektrolytkondensator versehenen Schalter auf. Diese Bauteile sind alle kostengünstig herstellbar und einfach zu handhaben, so dass die Erfindung auch in bereits bestehende Systeme in einfacher und kostengünstiger Weises nachgerüstet werden können.

Als besonders vorteilhaft hat es sich erwiesen, dass die Energieversorgung des Mikrocontrollers durch die Stromquelle und die Energieversorgung der Steuereinheit durch den Verbraucher erfolgt, da keine zusätzlichen Energiequellen zur Energieversorgung für diese Bauteile benötigt werden.

Fällt die Trenneinrichtung in Unterversorgung, das heißt, dass der Mikrocontroller nicht mehr genügend Strom für seinen Betrieb von der Stromquelle beziehen kann, so reicht die Versorgung des den Schalter treibenden Ausgangs des Mikrocontrollers nicht mehr zur Durchschaltung. Die Stromquelle, beispielsweise ein Fotovoltaikmodul, gibt dann die erzeugte Leistung nicht mehr an die nachgeschaltete Infrastruktur ab. Ist die Minderversorgung durch einen Defekt der Stromquelle bedingt, funktioniert der restliche String, das heißt daran angeschlossene weitere Stromquellen, über die Freilaufbeschaltung analog zur Vollbeschattung bestehender Fotovoltaiksysteme.

Wird die energetische Versorgung der erfindungsgemäßen Vorrichtung unterbrochen oder ein Teil der erfindungsgemäßen Vorrichtung beschädigt, so reicht die Versorgung des den Schalter treibenden Ausgangs des Mikrocontrollers nicht mehr zur Durchschaltung, so dass das Fotovoltaikmodul die erzeugte Leistung nicht mehr an die nachgeschaltete Infrastruktur abgibt. Ist die Minderversorgung lediglich durch einen Defekt einer einzelnen Stromquelle bedingt, so funktioniert der restliche String über die Freilaufbeschaltung analog zur Vollbeschattung eines Moduls bei bestehenden Fotovoltaiksystemen.

Wird die Steuereinheit oder Teile der angeschlossenen Leitungsinfrastruktur zerstört, so empfängt die Trenneinrichtung keine Signale der Steuereinheit auf seine periodisch gesendeten Kennungen mehr. Nachfolgend erfolgt die Abschaltung des den Schalter treibenden Ausgangs des Mikrocontrollers. Daraufhin ist wieder der zweite Betriebszustand eingenommen, bei dem eine Zuführung eines von der Stromquelle über eine Stromleitung gelieferten Stromes zu dem Verbraucher durch eine Trenneinrichtung unterbunden ist.

Unbekannte Störungen der Kommunikation durch Leistungsabfälle oder defekte Komponenten werden durch die Erfindung ebenfalls handhabbar. Empfängt die Trenneinrichtung innerhalb des vordefinierten Zeitintervalls td kein Signal der Steuereinheit auf seine periodisch gesendeten Kennungen mehr, so deaktiviert sie die Leistungsabgabe durch Abschaltung des den Schalter treibenden Ausgangs des Mikrocontrollers. Daraufhin ist wieder der zweite Betriebszustand eingenommen, bei dem eine Zuführung eines von der Stromquelle über eine Stromleitung gelieferten Stromes zu dem Verbraucher durch eine Trenneinrichtung unterbunden ist.

Gezielte Abschaltung der Anlage durch z.B. Brandbekämpfungspersonal ist durch die Erfindung möglich. Empfängt die Trenneinrichtung innerhalb des Intervalls keine Antwort, so deaktiviert sie die Leistungsabgabe durch Abschaltung des den Schalter treibenden Ausgangs des Mikrocontrollers. Daraufhin ist wieder der zweite Betriebszustand eingenommen, bei dem eine Zuführung eines von der Stromquelle über eine Stromleitung gelieferten Stromes zu dem Verbraucher durch eine Trenneinrichtung unterbunden ist.

Dabei ist eine Schulung des Bedienpersonals für eine erfolgreiche Abschaltung in keinem Fall erforderlich, da jedweder Komponentenausfall die Abschaltung des den Schalter treibenden Ausgangs des Mikrocontrollers und somit die Stromlosschaltung der der Stromquelle nachfolgenden Infrastruktur zur Folge hat.

Die Erfindung deckt eine derzeitige Lücke beim Personenschutz in der Brandbekämpfung bei Fotovoltaikanlagen. Sie ist geeignet, Mindestanforderungen an die Sicherheit durch Stromlosschaltung der Fotovoltaikanlagen vor der Aufnahme von Löscharbeiten an Brandorten mit Dach- oder geländemontierten Fotovoltaikanlagen zu definieren.

Neben der ausgeführten Funktion als reines Trennglied kann der Kommunikationsweg auf der Stromleitung auch zur Übermittlung von an der Stromquelle, beispielsweise an dem Fotovoltaikmodul, zu gewinnenden Betriebsdaten verwendet werden. Im Zusammenspiel mit einer Steuerung der Ausgangsleistung kann so ein Regelkreis für den stringoptimierten Betrieb aufgebaut werden. Hier ergibt sich für den Betreiber der Fotovoltaikanlagen ein zusätzlicher wirtschaftlicher Anreiz.

Der Einsatz der Erfindung zur Überwachung, Absicherung und Steuerung von Batterieanordnungen in Notstromanlagen oder zur Überwachung und Entschärfung von Hochleistungsbatteriepaketen in Fahrzeugtreibsätzen ist ebenfalls möglich.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1:: ein Ausführungsbeispiels einer in ein Fotovoltaiksystem eingesetzten erfindungsgemäßen Vorrichtung in einer schematischen Darstellung,
- Figur 2:: drei in Reihe geschaltete Fotovoltaikmodule mit jeweils einer Trenneinrichtung einer erfindungsgemäßen Vorrichtung gemäß Figur 1 und einer vor beziehungsweise in einem Wechselrichter angeordneten Steuereinheit einer erfindungsgemäßen Vorrichtung gemäß Figur 1 in einer schematischen Darstellung und
- Figur 3:: ein Flussdiagramm eines erfindungsgemäßen Verfahrens.

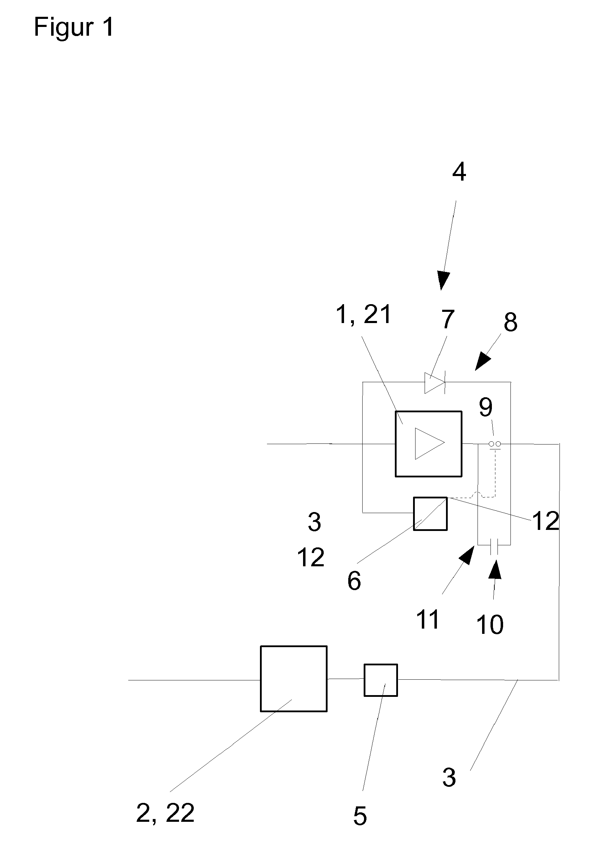

In der Figur 1 ist ein Ausführungsbeispiel einer erfindungsgemäßen Vorrichtung am Beispiel eines Fotovoltaiksystems dargestellt. Dabei ist ein Fotovoltaikmodul 21, welches im vorliegenden Ausführungsbeispiel eine Stromquelle 1 bildet, über eine Stromleitung 3 mit einem als Verbraucher 2 ausgebildeten Wechselrichter 22 verbunden. An beziehungsweise in dem Fotovoltaikmodul 21 ist eine Trenneinrichtung 4 angeordnet, mit welcher die zum Wechselrichter 22 führende Stromleitung 3 stromlos geschaltet werden kann.

Die Trenneinrichtung 4 besteht im Wesentlichen aus einem die Trenneinrichtung 4 steuernden Mikrokontroller 6, einem eine Freilaufdiode 7 aufweisenden By-Pass 8 und einem zu einem Elektrolytkondensator 10 parallel geschalteten mosFET 9. Dabei ist die Parallelschaltung des mosFETs 9 mit dem Elektrolytkondensator 10 als Schalter 11 ausgebildet, mit dem die Stromleitung 3 zum einen auf Stromdurchgang für einen von dem Fotovoltaikmodul 21 erzeugten Strom zum Wechselrichter 22 geschaltet werden kann und zum anderen eine Trennung der Stromleitung 3 direkt hinter dem Fotovoltaikmodul 21 erfolgen kann, so dass die zum Stromleitung 3 hinter dem mosFET 10 stromlos ist. Die Betätigung des Schalters 11 erfolgt dabei durch den Mikrokontroller 6, der dazu einen Ausgang 12 aufweist, mit dem der mosFET 9 entsprechend geschaltet werden kann.

Der Zustand mit Stromdurchgang zwischen Fotovoltaikmodul 21 und Wechselrichter 22 wird im Sinne der Erfindung als erster Betriebszustand und der Zustand mit einer Abtrennung der Stromleitung 3 hinter dem Fotovoltaikmodul 21 als zweiter Betriebszustand definiert.

An beziehungsweise in dem Wechselrichter 22 ist eine zur erfindungsgemäßen Vorrichtung gehörende Steuereinheit 5 angeordnet. Obwohl die Steuereinheit 5 Bestandteil der erfindungsgemäßen Vorrichtung ist, kann ein in dem Wechselrichter 22 bereits existierendes Steuergerät als Steuereinheit 5 verwendet werden, so dass eine separate Steuereinheit nicht zwangsläufig notwendig ist.

Die Trenneinrichtung 4 beziehungsweise deren Mikrocontroller 6 ist dazu ausgebildet, auf die Stromleitung 3 eine das Fotovoltaikmodul 21 identifizierende Kennung und gegebenenfalls eine laufenden Nummer in Form eines paketorientierten Kommunikationsprotokolls zu modulieren. Die Codierung der gesendeten Kennung erfolgt dabei im Manchester Code. Die Aufmodulierung des paketorientierten Kommunikationsprotokolls beginnt, sobald die vom Fotovoltaikmodul 21 gelieferte Energie ausreicht, die Trenneinrichtung 4 beziehungsweise den Mikrocontroller 6 zu betreiben.

In gleicher Weise ist die Steuereinheit 5 dazu ausgebildet, auf die Stromleitung 3 ein Signal in Form eines paketorientierten Kommunikationsprotokolls zu modulieren. Die Codierung des gesendeten Signals erfolgt dabei ebenfalls im Manchester Code. Die Aufmodulierung des paketorientierten Kommunikationsprotokolls beginnt, wenn die Steuereinheit 5 über die Stromleitung 3 eine von der Trenneinrichtung 4 beziehungsweise dem Mikrocontroller 5 gesendete Kennung empfängt, wobei die Energieversorgung der Steuereinheit 5 über den Wechselrichter 22 erfolgt.

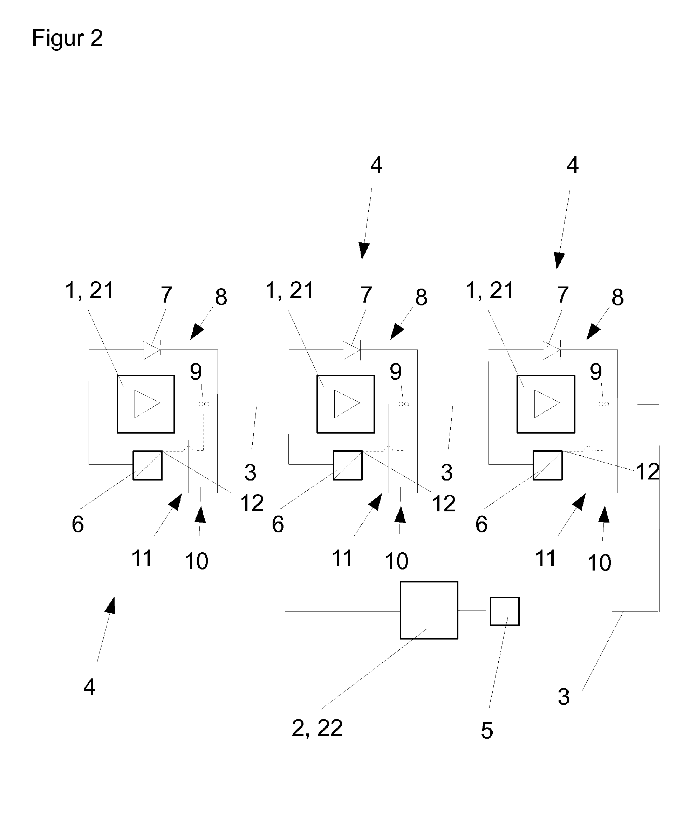

In Figur 2 sind drei mit einer in Figur 1 dargestellten Trenneinrichtung 4 ausgestattete Fotovoltaikmodule 21 in Reihe geschaltet, die über eine Stromleitung 3 mit einem Wechselrichter 22 verbunden sind. In oder an dem Wechselrichter 22 ist dabei eine Steuereinheit 5 angeordnet, welche in der zuvor beschriebenen Weise mit den Trenneinrichtungen 4 beziehungsweise Mikrocontrollern 6 der einzelnen Fotovoltaikmodule 21 kommuniziert.

Dabei können einzelne Fotovoltaikmodule 21 durchaus ausfallen, ohne dass der Stromfluss zwischen den anderen Fotovoltaikmodulen 21 und dem Wechselrichter 22dadurch beeinflusst wird, da der By-Pass 8 mit seiner Freilaufdiode 7 eine Umgehung des ausgefallenen Fotovoltaikmoduls 21 ermöglicht. Der mosFET 9 des ausgefallen Fotovoltaikmodul ist in diesem Fall auf Unterbrechung geschaltet, da der entsprechende Mikrokontroller 6 über seinen Ausgang 12 die entsprechende Beschaltung des mosFETs 10 durchgeführt hat oder aber dieser Betriebszustand eingenommen wurde, da der Mikrokontroller 6 nicht mehr durch das Fotovoltaikmodul 21 mit Energie versorgt wurde.

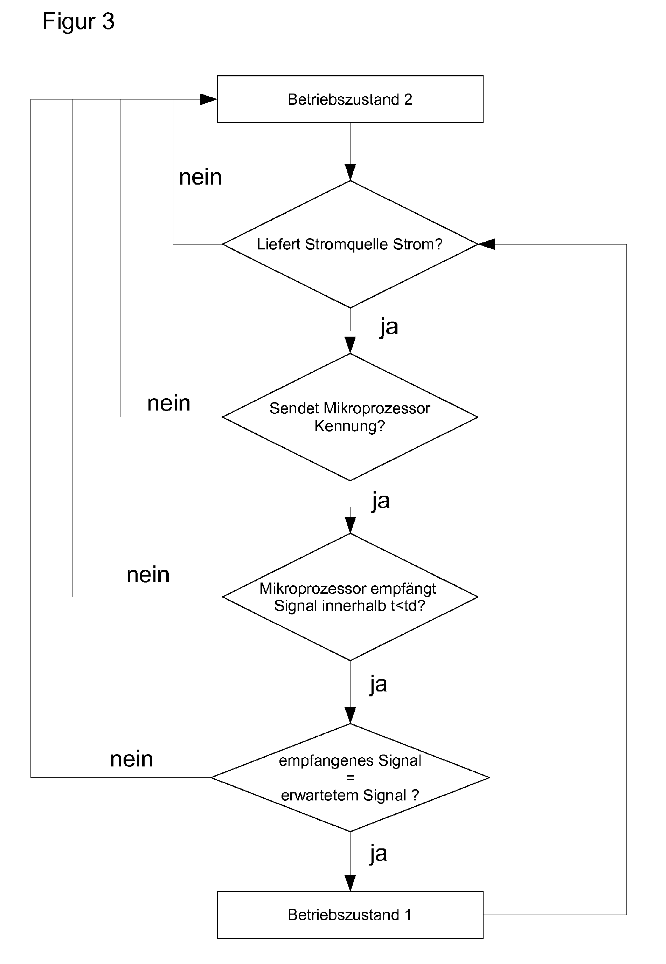

Figur 3 zeigt abschließend ein Flussdiagramm eines möglichen erfindungsgemäßen Verfahrens, wobei im Folgenden allerdings immer nur die Kommunikation zwischen einer Trenneinrichtung 4 eines Fotovoltaikmoduls 21 und einer Steuereinheit 5 eines Wechselrichters 22 beschrieben ist. Natürlich ist es aber auch möglich, dass die eine Steuereinheit 5 mit Trenneinrichtungen 4 mehrere Fotovoltaikmodule 21 kommuniziert.

Im Ausgangszustand ist der zweite Betriebszustand eingenommen, bei welchem eine Zuführung eines von dem Fotovoltaikmodule 21 über eine Stromleitung 3 gelieferten Stromes zu dem Wechselrichter 22 durch die Trenneinrichtung 4 unterbunden ist. Sobald das Fotovoltaikmodul 21 genug Energie in Form von elektrischen Strom liefert, um die Trennvorrichtung 4 beziehungsweise den Mikrokontroller 6 zu betreiben, findet im Mikrocontroller 6 eine erste Abfrage und Entscheidungsfindung statt.

Diese Abfrage lautet, ob das Fotovoltaikmodul 21 als Stromquelle 1 einen über einem Schwellwert liegenden Strom liefert. Sofern die Abfrage verneint wird, wird der zweite Betriebszustand aufrecht gehalten, so dass kein Strom über die Stromleitung 3 zu dem als Wechselrichter 22 ausgebildeten Verbraucher 2 abfließen kann.

Wird diese erste Abfrage allerdings bejaht, erfolgt eine zweite Abfrage. Die zweite Frage lautet jetzt, ob der Mikroprozessor 6 eine Kennung über die Stromleitung 3 zur Steuereinheit 5 des Wechselrichters 22 gesendet hat. Sofern auch diese Abfrage verneint wird, was auf einen Defekt der Trenneinrichtung 4 beziehungsweise des Mikrocontrollers 6 hindeutet, wird der zweite Betriebszustand aufrecht gehalten, so dass immer noch kein Strom über die Stromleitung 3 zu dem als Wechselrichter 22 ausgebildeten Verbraucher 2 abfließen kann.

Wird allerdings auch diese zweite Abfrage bejaht, schließt sich eine dritte Abfrage an, in der es darum geht, ob der Mikroprozessor 6 innerhalb eines vordefinierten Zeitintervalls td über die Stromleitung 3 ein von der Steuereinheit 5 als Antwort auf die Kennung gesendetes Signal empfängt. Sofern diese Abfrage ebenfalls verneint wird, wird der zweite Betriebszustand weiter aufrecht gehalten, so dass immer noch kein Strom über die Stromleitung 3 zu dem als Wechselrichter 22 ausgebildeten Verbraucher 2 abfließen kann.

Wird allerdings auch diese dritte Abfrage bejaht, folgt nun eine vierte abschließende Abfrage dahingehend, ob das von der Steuereinheit 5 über die Stromleitung 3 gesendete und von der Trenneinrichtung 4 beziehungsweise dem Mikrocontroller 6 empfangene Signal einem erwartenden Signal entspricht oder nicht. Sofern auch diese Abfrage verneint wird, wird der zweite Betriebszustand aufrecht gehalten, so dass kein Strom über die Stromleitung 3 zu dem als Wechselrichter 22 ausgebildeten Verbraucher 2 abfließen kann.

Wird allerdings diese vierte Abfrage bejaht, weist der Mikrocontroller 6 über seinen Ausgang 12 den Schalter 11 beziehungsweise den mosFET 9 an, den zweiten Betriebszustand nicht aufrecht zu erhalten, sonder den mosFET 9 auf Durchgang zu schalten, so dass der von dem als Stromquelle 1 ausgebildeten Fotovoltaikmodul 21 erzeugte Strom über die Stromleitung 3 zu dem als Wechselrichter 22 ausgebildeten Verbraucher 2 abfließen kann, was dem zuvor beschriebenen ersten Betriebszustand entspricht.

Nachfolgend beginnt wieder ein neuer Zyklus der Abfragen eins bis vier. Der periodische Ablauf dieser Abfragen erfolgt kontinuierlich mit einer vorgegebenen Frequenz. Diese vorgegebene Frequenz ergibt sich für den Fachmann dabei aus der maximalen Datenübertragungsrate innerhalb der vorhandenen Leitungsinfrastruktur und aus der Anzahl der anzusprechende Trenneinrichtungen 4. Durch eine solche Abfragefrequenz ist sichergestellt, dass die erfindungsgemäße Vorrichtung mit dem erfindungsgemäßen Verfahren die Stromleitung 3 zwischen der als Fotovoltaikmodul 21 ausgebildeten Stromquelle 1 und dem als Verbraucher 2 ausgebildeten Wechselrichter 22 innerhalb kürzester Zeit stromlos schalten, so dass eine Gefährdung des Bedien- oder Wartungspersonals auch bei einer Fehlfunktion einer einzelnen Komponente des Systems nahezu ausgeschlossen ist.

Ferner kann die Steuereinheit dazu veranlasst werden, kein Signal mehr oder aber ein nicht zu der durch die Trennvorrichtung 4 beziehungsweise den Mikrocontroller gesendete Kennung korrespondierendes beziehungsweise ein anderes als das erwartete, vordefinierte Signal über die Stromleitung 3 zu der Trennvorrichtung 4 beziehungsweise dem Mikrocontroller 6 zu senden. Dadurch kann die Stromleitung 3 gezielt durch Bedien- oder Wartungspersonal oder in Notsituationen durch Rettungskräfte stromlos geschaltet werden. Insofern kann nunmehr durch die Erfindung auch auf das kontrollierte Abbrennen bei einem Brand eines Gebäudes verzichtet werden, wenn die Fotovoltaikanlage mit einer erfindungsgemäßen Vorrichtung ausgestattet ist, die mit einem erfindungsgemäßen Verfahren betrieben wird.

### Bezugszeichenliste

- 1: Stromquelle
- 2: Verbraucher
- 3: Stromleitung
- 4: Trenneinrichtung
- 5: Steuereinheit
- 6: Mikrocontroller
- 7: Freilaufdiode
- 8: By-Pass
- 9: mosFET
- 10: Elektrolykondensator
- 11: Schalter
- 12: Ausgang
- 21: Fotovoltaikmodul
- 22: Wechselrichter
- td: vordefiniertes Zeitintervall

## Patentansprüche

1. Verfahren zum Betreiben einer Stromquelle (1),
wobei in einem ersten Betriebszustand ein von der Stromquelle (1) gelieferter Strom über eine Stromleitung (3) einem Verbraucher (2) zugeführt wird und
wobei in einem zweiten Betriebszustand eine Zuführung eines von der Stromquelle (1) über eine Stromleitung (3) gelieferten Stromes zu dem Verbraucher (2) durch eine Trenneinrichtung (4) unterbunden wird,
**dadurch gekennzeichnet, dass**
eine der Stromquelle (1) zugeordnete Trenneinrichtung (4) über die Stromleitung (3) eine Kennung an eine dem Verbraucher (2) zugeordnete Steuereinheit (5) sendet, wenn die Stromquelle (1) Strom liefert, und dass
a) der erste Betriebszustand ausgeführt wird, wenn die Steuereinheit (5) darauf ein erwartetes Signal in einem vordefinierten Zeitintervall (td) über die Stromleitung (3) zurücksendet oder
b) der zweite Betriebszustand ausgeführt wird, wenn die Steuereinheit (5) darauf ein anderes Signal oder gar kein Signal in einem vordefinierten Zeitintervall (td) über die Stromleitung (3) zurücksendet.

2. Verfahren nach Anspruch 1,
**dadurch gekennzeichnet, dass**
die von der Trenneinrichtung (4) gesendete Kennung und das von der Steuereinheit (5) gesendete Signal auf die Stromleitung (3) aufmoduliert wird.

3. Verfahren nach Anspruch 2,
**dadurch gekennzeichnet, dass**
die Aufmodulation der gesendeten Kennung und des gesendeten Signals in Form eines paketorientierten Kommunikationsprotokolls erfolgt.

4. Verfahren nach einem der vorhergehenden Ansprüche,
**dadurch gekennzeichnet, dass**
die Codierung der gesendeten Kennung und des gesendeten Signals im Manchester Code erfolgt.

5. Verfahren nach einem der Ansprüche 3 oder 4,
**dadurch gekennzeichnet, dass**
als paketorientiertes Kommunikationsprotokoll eine Variante des PLC-Busprotokolls oder eine Variation des One-Wire-Busprotokolls zur Datenübertragung verwendet wird.

6. Verfahren nach einem der vorhergehenden Ansprüche,
**dadurch gekennzeichnet, dass**
als Stromquelle (1) ein Fotovoltaikmodul (21) und das als Verbraucher (2) ein Wechselrichter (22) verwendet wird.

7. Vorrichtung zum Trennen einer Stromquelle (1) von einem Verbraucher (2), vorzugsweise zur Verwendung in einem Verfahren nach einem der vorhergehenden Ansprüche, mit einer an der Stromquelle (1) anordnenbaren Trenneinrichtung (4) und eine entfernt davon, vorzugsweise im Bereich des Verbrauchers (2) anordnenbaren Steuereinheit (5),
wobei die Stromquelle (1) und der Verbraucher (2) über eine Stromleitung miteinander verbunden sind,
**dadurch gekennzeichnet, dass**
die Trenneinrichtung (4) dazu ausgebildet ist, eine Kennung an die Steuereinheit (5) zu senden, und
dass die Steuereinheit (5) dazu ausgebildet ist, ein Signal als Antwort auf die Kennung an die Trenneinrichtung (4) zu senden.

8. Vorrichtung nach Anspruch 7,
**dadurch gekennzeichnet, dass**
die Trenneinrichtung einen Mikrocontroller (6), einen vorzugsweise mit einer Freilaufdiode (7) versehenen By-Pass (8) und einen vorzugsweise mit einem MosFET (9) und einem Elektrolytkondensator (10) versehenen Schalter (11) aufweist.

9. Vorrichtung nach einem der Ansprüche 7 oder 8,
**dadurch gekennzeichnet, dass**
die Stromquelle (1) als Fotovoltaikmodul (21) und der Verbraucher (2) als Wechselrichter (22) ausgebildet ist.

10. Vorrichtung nach einem der Ansprüche 7 bis 9,
**dadurch gekennzeichnet, das** s
die Energieversorgung des Mikrocontrollers (6) durch die Stromquelle (1) und die Energieversorgung der Steuereinheit (5) durch den Verbraucher (2) erfolgt.
